# EUROPÄISCHE PATENTSCHRIFT

(11) **EP 1 912 837 B1**
(45) Veröffentlichungstag und Bekanntmachung des Hinweises auf die Patenterteilung: **06.01.2016**
(21) Anmeldenummer: 06777715.1
(22) Anmeldetag: 12.07.2006
(51) Int. Cl.: B60T 8/48

(54) **FAHRZEUGBREMSANLAGE MIT EINER PUMPE**
VEHICLE BRAKE SYSTEM HAVING A PUMP
SYSTEME DE FREINAGE A POMPE POUR VEHICULE

(30) Priorität: 29.07.2005 DE 102005035595
(43) Veröffentlichungstag der Anmeldung: 23.04.2008
(73) Patentinhaber: ROBERT BOSCH GMBH, 70442 Stuttgart (DE)
(72) Erfinder: BODMANN, Carsten, 71634 Ludwigsburg (DE)
(86) Internationale Anmeldenummer: PCT/EP2006/064127
(87) Internationale Veröffentlichungsnummer: WO 2007/012562

(56) Entgegenhaltungen:
- EP-A2- 1 081 007
- DE-A1- 4 001 421
- DE-A1- 19 537 926
- DE-A1- 19 806 724
- US-B1- 6 648 423

## Beschreibung

### Stand der Technik

Die Erfindung betrifft eine Fahrzeugbremsanlage mit einer Pumpe und einer Vorkammer, aus der die Pumpe ein Fluid heraussaugen kann, sowie einem Ventil, mittels dem der Vorkammer wahlweise Fluid zugleitet werden kann und einem dem Ventil parallel geschalteten Bypassventil.

Aus dem Bereich der Fahrzeugbremsanlagen sind verschiedenste Systeme bekannt, bei denen zum aktiven Abbau oder Aufbau von Bremsdruck eine Pumpe vorgesehen ist. Die Pumpe saugt aus einer Vorkammer Bremsfluid an und fördert dieses dann wahlweise zum Abbau von Bremsdruck zurück zu einem Vorratsbehälter (Antiblockierbetrieb der Fahrzeugbremsanlage) oder die Pumpe fördert (beispielsweise im Rahmen eines elektronischen Stabilitätsprogramms) Hydraulikfluid in Richtung zu den Fahrzeugbremsen.

Innerhalb der hydraulischen Schaltung, in welche die Pumpe mit ihrer Vorkammer dabei eingebunden ist, ist dazu ferner ein Ventil vorgesehen, mittels dem der Vorkammer wahlweise Fluid zugleitet werden kann. Bei geschlossenem Ventil kann bei den bekannten Fahrzeugbremsanlagen in der Vorkammer der Pumpe dabei grundsätzlich Unterdruck erzeugt werden. Dieser Unterdruck kann bei bestimmten Betriebszuständen der Fahrzeugbremsanlage derart groß werden, dass es im Falle eines nachfolgenden Öffnens des Ventil zu einem schlagartigen Füllen der evakuierten Vorkammer kommen kann. Dieses Füllen kann zu einem unerwünscht lauten Geräusch, einem Schlag innerhalb der Druckströmung und/oder zu einem Durchfallen des zugehörigen Bremspedals führen. All diese Nebeneffekte sind unerwünscht.

Zu einer evakuierten Vorkammer einer Pumpe bei einer Fahrzeugbremsanlage kann es insbesondere dann kommen, wenn an der Vorkammer ein Speicher angeordnet ist und versucht wurde, diesen länger als notwendig zu entleeren. Eine solche Entleerung ergibt sich oftmals aber zwangsläufig, weil der Füllgrad des Speichers nur über ein Hydraulikmodell geschätzt werden kann, andererseits aber sicherzustellen ist, dass der Speicher zu bestimmten Zeitpunkten vollständig entleert ist.

US 6 648 423 B1 beschreibt eine Fahrzeugbremsanlage für gesteuertes und bequemes Bremsen, die eine Pumpe und ein aus zwei Teilventilen bestehendes Ventil aufweist.

### Aufgabe und Lösung der Erfindung

Es ist eine Aufgabe der Erfindung eine Fahrzeugbremsanlage der eingangs genannten Art zu schaffen, bei der die genannten Nebeneffekte eines schlagartigen Füllens der Vorkammer der Pumpe vermieden sind.

Die Aufgabe ist gemäß der Erfindung mit einer gattungsgemäßen Fahrzeugbremsanlage gelöst, bei der das Bypassventil in Abhängigkeit der Druckdifferenz zwischen Umgebungsdruck und Vorkammerdruck geschaltet ist. Das erfindungsgemäße Bypassventil ermöglicht es einen übermäßig großen, schlagartigen Druckausgleich über das zur Vorkammer führende Ventil der Fahrzeugbremsanlage zu vermeiden und verhindert dadurch vollständig das Entstehen von Geräuschen oder ein Durchfallen des Bremspedals. Der Fahrkomfort kann dadurch verbessert und Kundenbeanstandungen können vermieden werden.

Bei einer vorteilhaften Weiterbildung der erfindungsgemäßem Fahrzeugbremsanlage ist ein übermäßiges Evakuieren der Vorkammer der Pumpe insbesondere dadurch verhindert, dass eine Steuereinrichtung vorgesehen ist, die das Bypassventil bei einem Absinken des Vorkammerdrucks unter Umgebungsdruck öffnet und bei einem Ansteigen des Vorkammerdrucks auf oder über Umgebungsdruck wieder schließt. Mit der derartigen Steuereinrichtung und dem zugehörigen Bypassventil wird erfindungsgemäß der Druck in der Vorkammer der Pumpe der Fahrzeugbremsanlage also stets zumindest auf Umgebungsdruckniveau gehalten.

Diese erfindungsgemäße Steuereinrichtung kann besonders bevorzugt allein mit einer, insbesondere rein mechanischen Stelleinrichtung geschaffen sein, welche das Bypassventil durch den Umgebungsdruck betätigt pneumatisch öffnet.

Darüber hinaus kann die Steuereinrichtung insgesamt ohne aufwendige Sensorik und Betätigungsmittel ausgestaltet sein, indem das Bypassventil ferner durch eine einfache Stelleinrichtung betätigt durch den Vorkammerdruck hydraulisch geschlossen wird. Auch diese Stelleinrichtung kann vorteilhaft rein mechanisch gestaltet sein.

Um mit derart einfachen Stelleinrichtungen arbeiten zu können, sollte das erfindungsgemäße Bypassventil ferner als ein Schieberventil gestaltet sein, welches insbesondere linear verschiebbar ist.

Das erfindungsgemäße Bypassventil und die damit erzielte Vermeidung von übermäßigen Druckausgleichsvorgängen an Fahrzeugbremsanlagen ist besonders im Zusammenhang mit Hochdruckschaltventilen von hydraulischen Bremsanlagen von Vorteil.

Darüber hinaus kommt die Erfindung besonders dann bevorzugt zum Einsatz, wenn die Vorkammer zumindest einen Teil von einer von einem Speicher zur Pumpe führenden Saugleitung ist. Wenn das erfindungsgemäße Bypassventil einer derartigen Vorkammer zugeordnet ist, kann insbesondere das oben erwähnte schlagartige Füllen der Vorkammer nach einer vollständigen Entleerung des Speichers verhindert werden.

### Kurzbeschreibung der Zeichnungen

Nachfolgend wird ein Ausführungsbeispiel einer erfindungsgemäßen Fahrzeugbremsanlage anhand der beigefügten schematischen Zeichnungen näher erläutert. Es zeigt:
- Fig. 1: einen hydraulische Schaltplan einer Fahrzeugbremsanlage gemäß dem Stand der Technik.
- Fig. 2: einen hydraulischen Schaltplan einer Fahrzeugbremsanlage gemäß der Erfindung und
- Fig. 3: einen Längsschnitt eines erfindungsgemäßen Bypassventils der Fahrzeugbremsanlage gemäß Fig. 2.

### Detaillierte Beschreibung des Ausführungsbeispiels

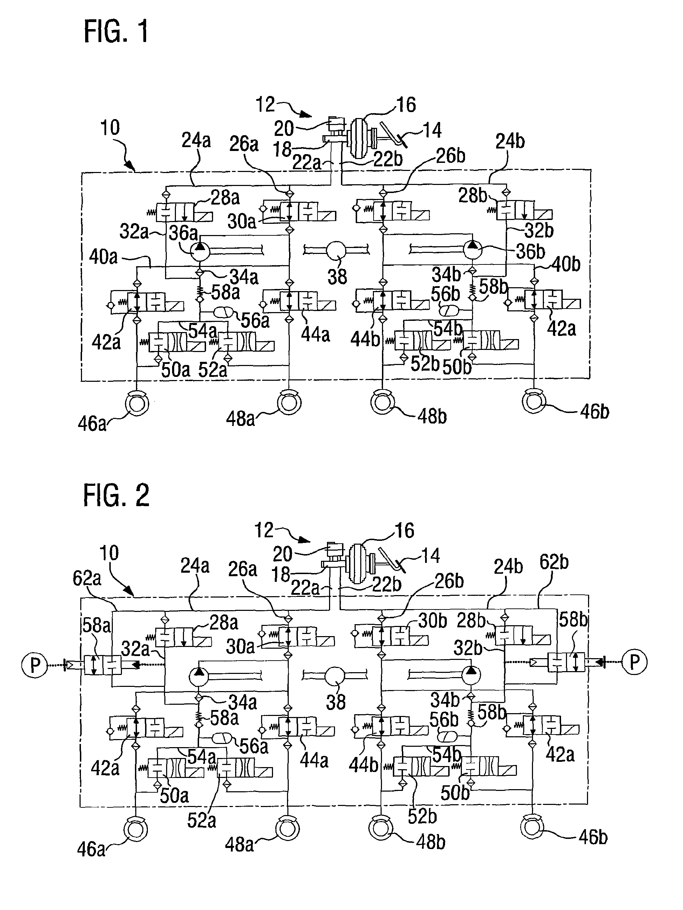

In Fig. 1 ist der hydraulische Schaltplan einer Fahrzeugbremsanlage 10 gemäß dem Stand der Technik dargestellt. Die Fahrzeugbremsanlage 10 beinhaltet eine Bremsbetätigungseinheit 12, welche in herkömmlicher Weise ein Bremspedal 14, einen Bremskraftverstärker 16, einen Hauptbremszylinder 18 und ein Bremsfluidreservoir 20 umfasst.

An den Hauptbremszylinder 18 und das daran angeordnete Bremsfluidreservoir 20 sind zwei Leitungen 22a und 22b angeschlossen, die jeweils zu einem von zwei getrennten Bremskreisen gehören. Diese beiden Bremskreise sind im Wesentlichen baugleich aufgebaut und werden nachfolgen durch Verwendung der Bezugszeichen "a" und "b" unterschieden. Zur Vereinfachung wird die nachfolgende Erläuterung auf den ersten dieser beiden Bremskreise beschränkt, wobei davon auszugehen ist, dass der andere Bremskreis, wie erwähnt, im Wesentlichen baugleich ist.

Die Leitung 22a spaltet sich in zwei Leitungen 24a und 26a auf, an denen ein Hochdruckschaltventil 28a bzw. ein Unterdruckschaltventil 30a angeschlossen sind. Das Hochdruckschaltventil 28a führt mit einer Leitung 32a zu einer Vorkammer 34a, die zu einer Pumpe 36a gehört. Die Pumpe 36a fördert angetrieben von einem Motor 38 in eine Leitung 40a, welche einerseits am Unterdruckschaltventil 30a angeschlossen ist und ferner zu Radbremszylinder-Einlassventilen 42a und 44a führt. An den Radbremszylinder-Einlassventilen 42a und 44a ist jeweils eine Radbremse 46a bzw. 48a angeschlossen, deren Rücklaufleitungen zu zwei Radbremszylinder-Auslassventilen 50a bzw. 52a führen. Hinter den Radbremszylinder-Auslassventilen 50a und 52a schließt eine gemeinsame Leitung 54a an, an der ein Speicher 56a angeschlossen ist und die ferner über ein Rückschlagventil 58a zur Leitung 32a bzw. Vorkammer 34a der Pumpe 36a führt.

Während des Betrieb der derartigen Fahrzeugbremsanlage muss betriebsbedingt von Zeit zu Zeit der Speicher 56a geleert werden. Der Füllgrad des Speichers 56a wird dabei über ein Hydraulikmodell geschätzt. Zugleich muss beim Leeren des Speichers 56a sichergestellt werden, dass dieser vollständig geleert wird. Um eventuelle Schätzfehler auszugleichen wird der Entleerungsvorgang daher länger als nötig durchgeführt. Dabei kann im Raum zwischen dem Hochdruckschaltventil 28a und der Pumpe 36a ein Unterdruck entstehen. Bei nachfolgenden Regeleingriffen an der Fahrzeugbremsanlage 10 kann in bestimmten Fällen das Hochdruckschaltventil 28a geöffnet werden, wodurch insbesondere die evaluierte Vorkammer 34a schlagartig mit Hydraulikfluid gefüllt wird. Dieser Füllvorgang führt zu einem lauten Geräusch und gegebenenfalls zu einem Durchfallen des Bremspedals. Kundenbeanstandungen können die Folge sein.

Um das genannte schlagartige Füllen zu vermeiden ist bei dem in Fig. 2 dargestellten Ausführungsbeispiel der Erfindung dem Hochdruckschaltventil 28a (wie auch entsprechend einem Hochdruckschaltventil 28b des zweiten Bremskreises) ein Bypassventil 60a in einer Leitung 62a parallel geschaltet. Die Leitung 62a zweigt dabei von der Leitung 24a ab und mündet in die Leitung 32a.

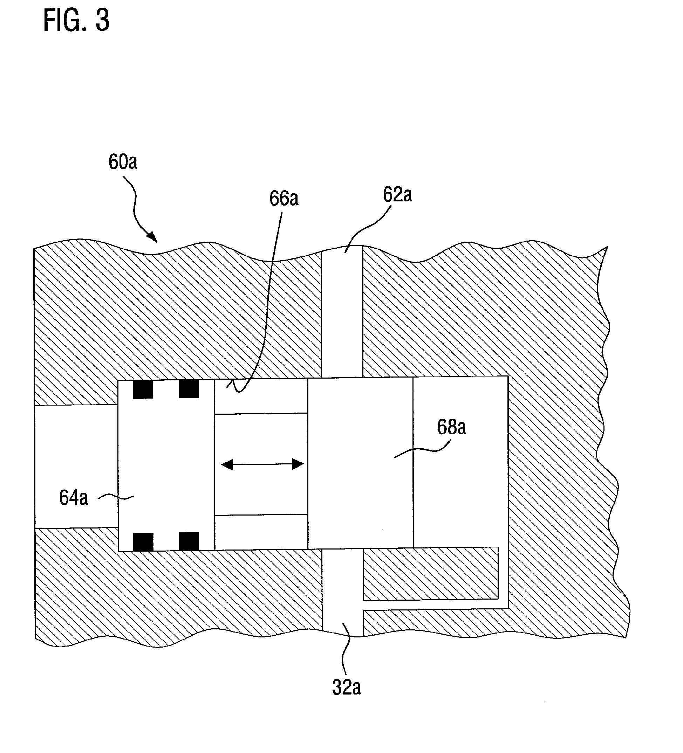

Das Bypassventil 60a ist in Fig. 3 näher veranschaulicht und mit einer ersten Stelleinrichtung 64a versehen, mittels der es durch den Umgebungsdruck gegen den in der Leitung 32a bzw. der Vorkammer 34a herrschenden Druck in Richtung auf eine Offenstellung bewegbar ist. Die erste Stelleinrichtung 64a ist dazu als ein abgedichteter Kolben gestaltet, der in einer Öffnung 66a verschiebbar ist und an dem an einer Stirnseite Umgebungsdruck herrscht. Ferner weist das Bypassventil 60a eine zweite Stelleinrichtung 68a auf, die ähnlich wie die Stelleinrichtung 64a ebenfalls als ein in der Öffnung 66a verschiebbarer Kolben gestaltet ist. An die Stirnseite dieses Kolbens ist der Druck der Leitung 32a bzw. Vorkammer 34a geführt, sodass die Stelleinrichtung 68a gegen den Umgebungsdruck das Bypassventil 60a in eine (in Fig. 3 dargestellte) Geschlossenstellung bewegt.

Das Bypassventil 60a schaltet damit in Abhängigkeit der Druckdifferenz zwischen dem Umgebungsdruck und dem Vorkammerdruck an der Fahrzeugbremsanlage 10. Ein Evakuieren der Vorkammer 34a wird mit dem Bypassventil 60a dabei verhindert, denn dieses öffnet sobald der Druck in der Leitung 32a unter den Umgebungsdruck sinkt. Der oben erläuterte, im Stand der Technik vorhandene schlagartige Druckausgleich am Hochdruckschaltventil ist auf diese Weise erfindungsgemäß vermieden.

### Bezugszeichenliste

- 10: Fahrzeugbremsanlage
- 12: Bremsbetätigungseinheit
- 14: Bremspedal
- 16: Bremskraftverstärker
- 18: Hauptbremszylinder
- 20: Bremsfluidreservoir
- 22a/22b: Leitung
- 24a/24b: Leitung
- 26a/26b: Leitung
- 28a/28b: Hochdruckschaltventil
- 30a/30b: Unterdruckschaltventil
- 32a/32b: Leitung
- 34a/34b: Vorkammer
- 36a/36b: Pumpe
- 38: Motor
- 40a/40b: Leitung
- 42a/42b: Radbremszylinder-Einlassventil
- 44a/44b: Radbremszylinder-Einlassventil
- 46a/46b: Radbremse
- 48a/48b: Radbremse
- 50a/50b: Radbremszylinder-Auslassventil
- 52a/52b: Radbremszylinder-Auslassventil
- 54a/54b: Leitung
- 56a/56b: Speicher
- 58a/58b: Rückschlagventil
- 60a/60b: Bypassventil
- 62a/62b: Leitung
- 64a/64b: Stelleinrichtung
- 66a/66b: Öffnung
- 68a/68b: Stelleinrichtung

## Patentansprüche

1. Fahrzeugbremsanlage (10) mit einer Pumpe (36a; 36b) und einer Vorkammer (34a; 34b), aus der die Pumpe (36a; 36b) ein Fluid heraussaugen kann, sowie einem Ventil (28a; 28b), mittels dem der Vorkammer (34a; 34b) wahlweise Fluid zugeleitet werden kann, und einem dem Ventil (28a; 28b) parallel geschalteten Bypassventil (60a; 60b),
**dadurch gekennzeichnet, dass** das Bypassventil (60a; 60b) in Abhängigkeit der Druckdifferenz zwischen Umgebungsdruck und Vorkammerdruck geschaltet ist.

2. Fahrzeugbremsanlage nach Anspruch 1,
**dadurch gekennzeichnet, dass** eine Steuereinrichtung (64a; 64b; 66a; 66b; 68a; 68b) vorgesehen ist, die das Bypassventil (60a; 60b) bei einem Absinken des Vorkammerdrucks unter Umgebungsdruck öffnet und bei einem Ansteigen des Vorkammerdrucks auf oder über Umgebungsdruck wieder schließt.

3. Fahrzeugbremsanlage nach Anspruch 1 oder 2,
**dadurch gekennzeichnet, dass** an dem Bypassventil (60a; 60b) eine Stelleinrichtung (64a; 64b) vorgesehen ist, die das Bypassventil (60a; 60b) durch den Umgebungsdruck betätigt pneumatisch öffnet.

4. Fahrzeugbremsanlage nach einem der Ansprüche 1 bis 3,
**dadurch gekennzeichnet, dass** an dem Bypassventil (60a; 60b) eine Stelleinrichtung (68a; 68b) vorgesehen ist, die das Bypassventil (60a; 60b) durch den Vorkammerdruck betätigt hydraulisch schließt.

5. Fahrzeugbremsanlage nach einem der Ansprüche 1 bis 4,
**dadurch gekennzeichnet, dass** das Bypassventil (60a; 60b) als ein Schieberventil gestaltet ist.

6. Fahrzeugbremsanlage nach einem der Ansprüche 1 bis 5,
**dadurch gekennzeichnet, dass** das Ventil (28a; 28b) zusammen mit dem Bypassventil (60a; 60b) als ein Hochdruckschaltventil einer hydraulischen Bremsanlage gestaltet ist.

7. Fahrzeugbremsanlage nach einem der Ansprüche 1 bis 6,
**dadurch gekennzeichnet, dass** die Vorkammer (34a; 34b) zumindest ein Teil von einer von einem Speicher (56a; 56b) zur Pumpe (36a; 36b) führende Saugleitung (32a; 32b; 54a; 54b) ist.

## Claims

1. Vehicle brake system (10) having a pump (36a; 36b) and a pre-chamber (34a; 34b), from which the pump (36a; 36b) can extract a fluid, and having a valve (28a; 28b), by means a which fluid can optionally be fed to the pre-chamber (34a; 34b), and having a bypass valve (60a; 60b) which is connected in parallel with the valve (28a; 28b), **characterized in that** the bypass valve (60a; 60b) is switched in a manner which is dependent on the pressure difference between ambient pressure and pre-chamber pressure.

2. Vehicle brake system according to Claim 1, **characterized in that** a control device (64a; 64b; 66a; 66b; 68a; 68b) is provided which opens the bypass valve (60a; 60b) if the pre-chamber pressure drops below ambient pressure and closes it again if the pre-chamber pressure rises to or above ambient pressure.

3. Vehicle brake system according to Claim 1 or 2, **characterized in that** an actuating device (64a; 64b) is provided on the bypass valve (60a; 60b), which actuating device (64a; 64b) pneumatically opens the bypass valve (60a; 60b) in a manner which is actuated by way of the ambient pressure.

4. Vehicle brake system according to one of Claims 1 to 3, **characterized in that** an actuating device (68a; 68b) is provided on the bypass valve (60a; 60b), which actuating device (68a; 68b) hydraulically closes the bypass valve (60a; 60b) in a manner which is actuated by way of the pre-chamber pressure.

5. Vehicle brake system according to one of Claims 1 to 4, **characterized in that** the bypass valve (60a; 60b) is designed as a slide valve.

6. Vehicle brake system according to one of Claims 1 to 5, **characterized in that**, together with the bypass valve (60a; 60b), the valve (28a; 28b) is designed as a high-pressure control valve of a hydraulic brake system.

7. Vehicle brake system according to one of Claims 1 to 6, **characterized in that** the pre-chamber (34a; 34b) is at least part of a suction line (32a; 32b; 54a; 54b) which leads from an accumulator (56a; 56b) to the pump (36a; 36b).

## Revendications

1. Installation de freinage de véhicule (10) comprenant une pompe (36a ; 36b) et une préchambre (34a ; 34b) depuis laquelle la pompe (36a ; 36b) peut aspirer un fluide, ainsi qu'une soupape (28a ; 28b), au moyen de laquelle du fluide peut être acheminé de manière sélective à la préchambre (34a ; 34b), et une soupape de dérivation (60a ; 60b) montée en parallèle avec la soupape (28a ; 28b), **caractérisée en ce que** la soupape de dérivation (60a ; 60b) est connectée en fonction de la différence de pression entre la pression ambiante et la pression dans la préchambre.

2. Installation de freinage de véhicule selon la revendication 1, **caractérisée en ce qu'**un dispositif de commande (64a ; 64b ; 66a ; 66b ; 68a ; 68b) est prévu, lequel ouvre la soupape de dérivation (60a ; 60b) dans le cas d'une diminution de la pression dans la préchambre en dessous de la pression ambiante et la referme à nouveau dans le cas d'une augmentation de la pression dans la préchambre jusqu'à la pression ambiante ou au-dessus de celle-ci.

3. Installation de freinage de véhicule selon la revendication 1 ou 2, **caractérisée en ce qu'**un dispositif de commande (64a ; 64b) est prévu au niveau de la soupape de dérivation (60a ; 60b), lequel ouvre pneumatiquement la soupape de dérivation (60a ; 60b) sous l'effet de la pression ambiante.

4. Installation de freinage de véhicule selon l'une quelconque des revendications 1 à 3, **caractérisée en ce qu'**un dispositif de commande (68a ; 68b) est prévu au niveau de la soupape de dérivation (60a ; 60b), lequel ferme hydrauliquement la soupape de dérivation (60a ; 60b) sous l'effet de la pression dans la préchambre.

5. Installation de freinage de véhicule selon l'une quelconque des revendications 1 à 4, **caractérisée en ce que** la soupape de dérivation (60a ; 60b) est configurée sous forme de soupape à tiroir.

6. Installation de freinage de véhicule selon l'une quelconque des revendications 1 à 5, **caractérisée en ce que** la soupape (28a ; 28b), conjointement avec la soupape de dérivation (60a ; 60b), est configurée sous forme de soupape de commutation haute pression d'une installation de freinage hydraulique.

7. Installation de freinage de véhicule selon l'une quelconque des revendications 1 à 6, **caractérisée en ce que** la préchambre (34a ; 34b) constitue au moins une partie d'une conduite d'admission (32a ; 32b ; 54a ; 54b) conduisant d'un accumulateur (56a ; 56b) à la pompe (36a ; 36b).
